# EUROPÄISCHE PATENTSCHRIFT

(11) **EP 2 974 908 B1**
(45) Veröffentlichungstag und Bekanntmachung des Hinweises auf die Patenterteilung: **17.04.2019**
(21) Anmeldenummer: 15001982.6
(22) Anmeldetag: 02.07.2015
(51) Int. Cl.: B60Q 3/74, B60Q 3/64, B60Q 3/208

(54) **LEUCHTANORDNUNG FÜR EIN KRAFTFAHRZEUG UND VERFAHREN ZUM BETREIBEN EINER LEUCHTANORDNUNG**
LIGHT ASSEMBLY FOR AN AUTOMOBILE AND METHOD FOR OPERATING A LIGHT ASSEMBLY
DISPOSITIF LUMINEUX POUR UN VEHICULE AUTOMOBILE ET PROCEDE DE FONCTIONNEMENT D'UN DISPOSITIF LUMINEUX

(30) Priorität: 16.07.2014 DE 102014010563
(43) Veröffentlichungstag der Anmeldung: 20.01.2016
(73) Patentinhaber: AUDI AG, 85045 Ingolstadt (DE)
(72) Erfinder: Schmitz, Christoph, 93326 Abensberg (DE); Neb, Jakob, 85049 Ingolstadt (DE)
(74) Vertreter: Thielmann, Frank

(56) Entgegenhaltungen:
- DE-A1-102008 046 935
- DE-A1-102009 022 806
- DE-A1-102012 108 781
- GB-A- 2 460 141
- JP-A- 2002 254 982
- JP-A- 2003 127 768
- KR-A- 20100 020 318

## Beschreibung

Die Erfindung betrifft eine Leuchtanordnung für ein Kraftfahrzeug, welche mindestens eine Lichtquelle umfasst. Von der Lichtquelle ausgesendetes Licht kann an einer durch einen Teil eines Dachs des Kraftfahrzeugs bereitgestellten Fläche eines Kraftfahrzeugbauteils in einen Sichtbereich eines Betrachters der Fläche reflektiert werden. Die Leuchtanordnung umfasst eine Einfassung, durch welche die Lichtquelle vor dem Betrachter verborgen ist. Die Einfassung weist wenigstens einen Lichtaustrittsbereich auf. Des Weiteren betrifft die Erfindung ein Verfahren zum Betreiben einer solchen Leuchtanordnung.

Die GB 2 460 141 A beschreibt eine Beleuchtungsvorrichtung für ein Fahrzeug, bei welchem eine Lichtquelle in einem Gehäuse an einer Fahrzeugsäule angebracht ist. Das ausgesendete Licht trifft auf einen Bereich eines Dachs des Fahrzeugs. Auf einem lichtdurchlässigen Teil der Beleuchtungsvorrichtung kann ein Filter mit einer Designstruktur angeordnet werden. Auf diese Weise kann eine Designstruktur auf den Bereich des Dachs projiziert werden. Hierbei wird in dem Dachbereich ein vergrößertes Bild der auf dem Filter vorgesehenen Designstruktur dargestellt.

Die DE 10 2012 009 170 A1 beschreibt ein Kraftfahrzeug mit einem Dachhimmel, wobei an seitlichen Längsrändern des Dachhimmels eine Leuchteinrichtung angeordnet ist. Als auf jeder Seite des Dachhimmels angeordnete Lichtquellen der jeweiligen Leuchteinrichtung dienen zwei Lichtleiter, welche sich in die Fahrzeuglängsrichtung erstrecken. Der jeweilige Lichtleiter ist in einer Halteleiste fixiert, welche wiederum an einer Befestigungsleiste festgelegt ist. Die Halteleiste weist zwei Stege auf, zwischen welchen der Lichtleiter angeordnet ist. Der dem Fahrgastraum nähere Steg bildet eine Abschirmung, hinter welcher der Lichtleiter verborgen aufgenommen ist, sodass er von sich im Kraftfahrzeug befindenden Personen nicht eingesehen werden kann. Die beiden Stege begrenzen einen Lichtemissionsspalt, aus welchem das Licht des Lichtleiters in Richtung auf eine Bespannung des Dachhimmels hin abgestrahlt wird. Der als Abschirmung dienende Steg stellt sicher, dass das ausgesendete Licht ausschließlich in Richtung der Bespannung des Dachhimmels emittiert wird. Die Bespannung kann aus einem Stoff bestehen, welcher eine leicht reflektierende Beschichtung besitzt. Der Lichtemissionsspalt ist derart bemessen, dass durch Zusammenwirken der beiden Lichtleiter die gesamte Dachhimmelfläche beleuchtet wird. So ergibt sich eine flächige Ausleuchtung der Bespannung des Dachhimmels, durch welche eine Ambientebeleuchtung realisierbar ist.

Die US 2013/0215637 A1 beschreibt eine Leuchtvorrichtung im Inneren eines Fahrgastraums eines Fahrzeugs, bei welcher unterhalb einer Instrumententafel ein manuell bedienbares Element etwa in Form eines Luftausströmers angeordnet ist. Ein Lichtleiter ist verborgen hinter der Instrumententafel angeordnet und strahlt Licht entlang einer sichtbaren Oberfläche des Elements ab. An einer Kante einer Einfassung des Elements wird das Licht reflektiert, sodass es von einem Insassen im Fahrgastraum wahrgenommen werden kann.

Die DE 10 2009 038 483 A1 beschreibt eine indirekte Fahrzeuginnenraumbeleuchtung, bei welcher zwei bandförmige Leuchtkörper an zwei korrespondierenden Profilsegmenten angeordnet sind, wobei die Leuchtkörper um eine Öffnung im Dach des Fahrzeugs umlaufen. Die Leuchtkörper strahlen das Licht parallel zu einem Glasdach ab, welches in der Öffnung angeordnet ist. Durch eine Reflexion des Lichts an der Unterseite des Glasdachs soll eine indirekte, gleichmäßige und blendfreie Ausleuchtung des Fahrzeuginnenraums erreicht werden.

Die DE 10 2007 041 702 A1 beschreibt ein Lautsprechermodul mit einem Leuchtelement. Hierbei sind Leuchtdioden so angeordnet, dass sie von einer Abdeckungsseite des Lautsprechermoduls her nicht direkt zu sehen sind. Vielmehr strahlen die Leuchtdioden ihr Licht auf eine Schallabstrahlmembran hin, von wo aus das Licht diffus reflektiert wird.

Die DE 10 2011 014 701 A1 beschreibt eine Leuchtvorrichtung für ein Kraftfahrzeug, bei welcher transparente Streifen und nicht transparente Streifen eine Platte bilden.

Die US 2008/0093890 A1 beschreibt eine Komponente für ein Fahrzeug, welche einen Hartschaumkörper umfasst, in welchen eine Lampe integriert ist. Von der in dem Hartschaumkörper verborgen angeordneten Lampe ausgesendetes Licht wird über ein Lichtleitelement mit reflektierenden Wänden hin zu einer transparenten Abdeckung geleitet, wo das austretende Licht für einen Betrachter sichtbar ist.

Die DE 101 34 641 A1 beschreibt ein Schiebedach für ein Fahrzeug, welches eine Glasplatte und eine um einen Rand der Glasplatte umlaufende Hinterschäumung umfasst. In der Hinterschäumung sind Glühlampen in einem Plexiglaskörper angeordnet, über welchen das von den Glühlampen ausgesendete Licht hin zur Glasplatte ausgesendet werden kann. Der Plexiglaskörper bildet ein geschlossenes Lichtband, welches nach innen, bevorzugt in einer horizontalen Ebene, abstrahlt. Zur Verbesserung der Reflexion kann die Glasplatte in einem an die Hinterschäumung angrenzenden Bereich aufgeraut oder beschichtet sein.

Die DE 10 2012 005 397 A1 beschreibt eine Beleuchtungseinrichtung für ein Kraftfahrzeug, welche als sogenannte Konturbeleuchtung ausgebildet ist, da sie optisch die Form oder Kontur eines hervorzuhebenden Gegenstands betont. Hierbei ist in einem Gehäuse aus einem für Licht transparenten Kunststoffmaterial, welches als Streuscheibe fungiert, ein Lichtleiter angeordnet. Das Gehäuse ist mit einer für das Licht undurchlässigen Schicht versehen, welche lediglich im Bereich einer schmalen Lichtaustrittslinie fehlt. Das aus dem Gehäuse austretende Licht ist daher lediglich im Bereich dieser Lichtaustrittslinie sichtbar, welche die Konturbeleuchtung bildet.

Die DE 10 2012 103 512 A1 beschreibt einen Spiegel mit einer reflektierenden Fläche, an dessen Rand eine Lichtquelle angeordnet ist. Die Lichtquelle gibt Licht in ein flächig ausgebildetes Leuchtelement ab, welches in das Leuchtelement eingekoppeltes Licht streut und zu einem Betrachter des Spiegels hin abstrahlt. In einem ausgeschalteten Betriebszustand der Lichtquelle ist das Leuchtelement transparent, sodass die dahinter angeordnete reflektierende Fläche des Spiegels für den Betrachter sichtbar ist.

Die EP 1 101 655 A2 beschreibt eine Fahrzeuginnenraumbeleuchtung für eine indirekte Beleuchtung des Dachhimmels. Hierbei tritt Licht aus einer Seitenfläche einer Leuchtanordnung aus, welche am Dachhimmel angeordnet ist. Eine Lichtquelle der Leuchtanordnung strahlt das Licht über die lichtdurchlässige Seitenfläche der Leuchtanordnung gegen den Dachhimmel ab.

Die DE 10 2008 011 406 A1 beschreibt ein Cabriolet-Verdeck, bei welchem zwischen einem äußeren Verdeckbezug und einem Innenhimmel eine Lichtquelle angeordnet ist. Die Lichtquelle beaufschlagt einen biegsamen Flächenlichtleiter von der schmalen Seite her mit Licht. Eine in dem Flächenlichtleiter vorgesehene Strukturierung sorgt für ein Auskoppeln des Lichts aus dem Flächenlichtleiter hin zum Innenhimmel. Der Innenraum des Fahrzeugs wird dadurch indirekt beleuchtet.

Aufgabe der vorliegenden Erfindung ist es, eine Leuchtanordnung der eingangs genannten Art und ein Verfahren zum Betreiben einer solchen Leuchtanordnung zu schaffen, mittels welcher beziehungsweise mittels welchem sich eine besonders ansprechende Beleuchtung erreichen lässt.

Diese Aufgabe wird durch eine Leuchtanordnung mit den Merkmalen des Patentanspruchs 1 und durch ein Verfahren mit den Merkmalen des Patentanspruchs 9 gelöst. Vorteilhafte Ausgestaltungen mit zweckmäßigen Weiterbildungen der Erfindung sind in den abhängigen Patentansprüchen angegeben.

Bei der erfindungsgemäßen Leuchtanordnung weist eine geometrische Figur, welche mittels des reflektierten Lichts auf der Fläche darstellbar ist, Größenverhältnisse auf, welche Größenverhältnissen einer Kontur des im Betrieb der Leuchtanordnung aus der Einfassung austretenden Lichts entsprechen, wobei die Kontur durch den wenigstens einen Lichtaustrittsbereich vorgegeben ist. Als Kontur des Lichtaustrittsbereichs ist hierbei eine durch einen Rand des Lichtaustrittsbereichs begrenzte Fläche zu verstehen, über welche im Betrieb der Leuchtanordnung Licht austritt.

Weist beispielsweise die Kontur des Lichtaustrittsbereichs eine Länge auf, welche größer ist als eine Breite der Kontur, so weist auch die im Betrieb der Leuchtanordnung auf der Fläche dargestellte geometrische Figur eine Länge auf, welche größer ist als eine Breite der geometrischen Figur. Eine längliche, schmale Kontur des Lichtaustrittsbereichs führt also zu einer länglichen, schmalen Kontur der geometrischen Figur auf der reflektierenden Fläche. Auf diese Weise lässt sich etwa ein präziser Lichtstreifen auf der reflektierenden Fläche darstellen. Dennoch ist die das Licht für den Lichtstreifen bereitstellende Lichtquelle für einen Betrachter der reflektierenden Fläche nicht sichtbar, da die Einfassung die Lichtquelle vor dem Betrachter verbirgt. Auf der reflektierenden Fläche ist vielmehr lediglich die Reflexion des aus dem Lichtaustrittsbereich austretenden Lichts für den Betrachter zu sehen.

Die Größe und die Form des Lichtaustrittsbereichs oder Lichtaustrittsfensters gibt somit die Größe und Form des Bilds der Lichtreflexion vor, welches als geometrische Figur auf der reflektierenden Fläche darstellbar ist. Mittels einer solchen Leuchtanordnung lässt sich eine besonders ansprechende Beleuchtung erreichen, da beispielsweise ein präzises Konturlicht als Spiegelung in der reflektierenden Fläche realisiert werden kann.

Die Fläche ist durch einen Teil eines Dachs des Kraftfahrzeugs bereitgestellt, etwa indem ein aus Glas oder Kunststoff gebildetes Fenster im Dach des Kraftfahrzeugs zum Reflektieren des aus dem Lichtaustrittsbereich austretenden Lichts genutzt wird. So lässt sich beispielsweise ein Konturlicht eines Dachfensters, insbesondere eines Schiebedachs oder eines Panomramadachs, als Spiegelung im Glas oder Kunststoff dieses Fensters realisieren.

Bei der Erfindung umfasst die durch den wenigstens einen Lichtaustrittsbereich vorgegebene Kontur wenigstens eine Linie. Mittels einer solchen Linie lässt sich eine Gestalt des die reflektierende Fläche aufweisenden Kraftfahrzeugbauteils besonders gut hervorheben, und dennoch leuchtet die reflektierende Fläche nicht flächig. Vielmehr reflektiert die Fläche lediglich das aus dem Lichtaustrittsbereich austretende Licht als linienförmige geometrische Figur hin zum Betrachter, um so einen Umriss des Kraftfahrzeugbauteils nachzuzeichnen.

Die wenigstens eine Linie kann unterbrochen sein, sodass diskrete, streifenförmige Bereiche des reflektierten Lichts das Konturlicht bereitstellen, also das die Form oder Gestalt des Kraftfahrzeugbauteils hervorhebende Licht. Zusätzlich oder alternativ kann die Linie eine Wellenform und/oder eine Zackenform aufweisen. Auch durch solche gewellten oder gezackten Linien lässt sich nämlich die Form oder ein Umriss etwa eines hervorzuhebenden Bereichs des Kraftfahrzeugbauteils betonen.

Die durch den wenigstens einen Lichtaustrittsbereich vorgegebene Kontur kann auch wenigstens einen Kegelschnitt wie etwa Kreise oder Ovale umfassen. Zusätzlich oder alternativ kann die Kontur des wenigstens einen Lichtaustrittsbereichs die Form eines Polygons aufweisen. Entsprechend ist dann im Betrieb der Leuchtanordnung auf der reflektierenden Fläche als geometrische Figur der wenigstens eine Kegelschnitt und/oder das wenigstens eine Polygon dargestellt und für den Betrachter optisch erfassbar.

Als weiter vorteilhaft hat es sich gezeigt, wenn die Einfassung durch einen Vorsprung eines Grundkörpers gebildet ist, an welchem das die reflektierende Fläche aufweisende Kraftfahrzeugbauteil angeordnet ist. Dadurch lässt sich nämlich die Lichtquelle besonders gut vor dem Betrachter verbergen. Bevorzugt ist hier eine Mittelebene des Lichtaustrittsbereichs zu der reflektierenden Fläche geneigt ausgerichtet. Dann kann nämlich der Betrachter besonders gut die geometrische Figur erkennen, welche von den Größenverhältnissen her der Kontur des Lichtaustrittsbereichs entspricht.

Eine besonders gleichmäßige Auskopplung von Licht aus dem Lichtaustrittsbereich lässt sich erreichen, wenn gemäß einer weiteren vorteilhaften Ausgestaltung als die wenigstens eine Lichtquelle ein Lichtwellenleiter in der Einfassung angeordnet ist. Mit einem solchen Lichtwellenleiter lässt sich sehr einfach ein schmaler und präziser Lichtstreifen als auf der Fläche darstellbare geometrische Figur realisieren.

Des Weiteren kann in dem wenigstens einen Lichtaustrittsbereich ein Streuelement angeordnet sein. Dies ermöglicht auch die Verwendung mehrerer diskreter Lichtquellen und dennoch eine gleichmäßige Auskopplung des Lichts aus dem Lichtaustrittsbereich.

Als weiter vorteilhaft hat es sich gezeigt, wenn in der Einfassung ein Reflexionselement angeordnet ist, mittels welchem das von der wenigstens einen Lichtquelle ausgesendete Licht zu dem wenigstens einen Lichtaustrittsbereich hin umlenkbar ist. Dann braucht die zum Bereitstellen des Lichts vorzusehende elektrische Energie nicht über Leitungen bis in den Lichtaustrittsbereich der Einfassung eingebracht zu werden, sodass sich ein Verkabelungsaufwand verringern lässt. Als Reflexionselement kann insbesondere ein Spiegel zum Einsatz kommen, welcher das von der Lichtquelle ausgesendete Licht zum Lichtaustrittsbereich hin umlenkt.

Zumindest die zum Reflektieren des Lichts ausgebildete Fläche des Kraftfahrzeugbauteils kann durch ein Glas gebildet sein. Ein Glas mit einer hochglänzenden Oberfläche eignet sich nämlich besonders gut zum Reflektieren des aus dem Lichtaustrittsbereich austretenden Lichts. Zusätzlich oder alternativ kann die Fläche durch einen Kunststoff gebildet sein, etwa durch ein Polycarbonat (PC). Jedoch sind zum Reflektieren des Lichts auch andere Hochglanzflächen geeignet, etwa durch ein, insbesondere lackiertes, Holz gebildete Flächen. So lassen sich beispielsweise auch auf Echtholzapplikationen, wie sie im Kraftfahrzeugbau verwendet werden, mittels des reflektierten Lichts geometrische Figuren darstellen, deren Größenverhältnisse denen der Kontur des Lichtaustrittsbereichs entsprechen.

Bei dem erfindungsgemäßen Verfahren zum Betreiben einer Leuchtanordnung für ein Kraftfahrzeug sendet wenigstens eine Lichtquelle Licht aus, welches an einer durch einen Teil eines Dachs des Kraftfahrzeugs bereitgestellten Fläche eines Kraftfahrzeugbauteils in einen Sichtbereich eines Betrachters der Fläche reflektiert wird. Die Lichtquelle wird hierbei durch eine Einfassung vor dem Betrachter verborgen. Das Licht wird über wenigstens einen Lichtaustrittsbereich aus der Einfassung ausgekoppelt. Durch eine Größe und eine Form des Lichtaustrittsbereichs werden eine Größe und eine Form eines Bilds einer Lichtreflexion vorgegeben. Eine mittels des reflektierten Lichts auf der Fläche dargestellte geometrische Figur weist Größenverhältnisse auf, welche Größenverhältnissen einer durch den wenigstens einen Lichtaustrittsbereich vorgegebenen Kontur des aus der Einfassung austretenden Lichts entsprechen. Die durch den wenigstens einen Lichtaustrittsbereich vorgegebene Kontur umfasst wenigstens eine Linie, wobei die Fläche das aus dem Lichtaustrittsbereich austretende Licht als linienförmige geometrische Figur hin zum Betrachter reflektiert, welche einen Umriss des Kraftfahrzeugbauteils nachzeichnet.

Die für die erfindungsgemäße Leuchtanordnung beschriebenen Vorteile und bevorzugten Ausführungsformen gelten auch für das erfindungsgemäße Verfahren.

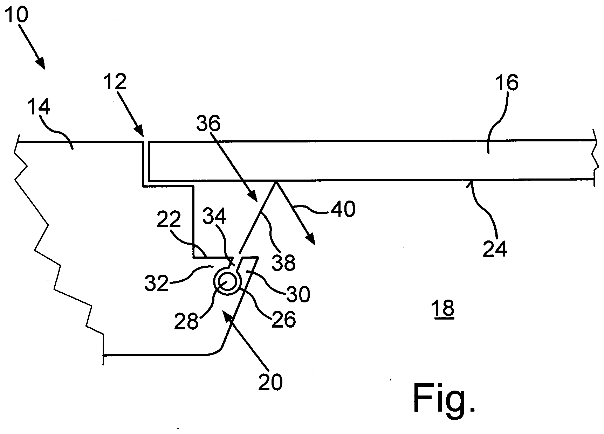

Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der, die durch die Ansprüche limitiert ist, zu verlassen. Es sind somit auch Ausführungen als von der Erfindung umfasst und offenbart anzusehen, die in der Figur nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnung.

Diese zeigt schematisch und ausschnittsweise ein Dach eines Kraftwagens in einer Schnittdarstellung, wobei ein Lichtwellenleiter Licht abgibt, welches durch ein Lichtaustrittsfenster hin zu einer reflektierenden Fläche einer im Dach des Kraftwagens angeordneten Glasscheibe gelangt und von der Glasscheibe in den Fahrgastraum des Kraftwagens reflektiert wird.

Von einem Kraftwagen 10 ist in der Fig. ausschnittsweise ein Dach 12 gezeigt, welches einen Dachrahmen 14 und eine an dem Dachrahmen 14 gehaltene Glasscheibe 16 als Beispiel für ein Kraftfahrzeugbauteil mit einer reflektierenden Oberfläche 24 umfasst. Durch den Dachrahmen 14 ist ein Grundkörper bereitgestellt, welcher einen zu einem Fahrgastraum 18 des Kraftwagens 10 hin hervorstehenden Vorsprung 20 umfasst.

Eine Oberseite 22 des Vorsprungs 20 verläuft vorliegend im Wesentlichen parallel zu der dem Fahrgastraum 18 zugewandten reflektierenden Oberfläche 24 der Glasscheibe 16. In dem Vorsprung 20 ist eine Ausnehmung 26 vorgesehen, in welcher eine Lichtquelle in Form eines Lichtwellenleiters 28 angeordnet ist. Der Vorsprung 20 dient als Einfassung des Lichtwellenleiters 28.

Zum Fahrgastraum 18 hin ist der in der Ausnehmung 26 angeordnete Lichtwellenleiter 28 durch eine im gezeigten Ausführungsbeispiel in Bezug auf die Oberfläche 24 schräg verlaufende Seitenwand 30 des Vorsprungs 20 verdeckt. Der Lichtwellenleiter 28 ist daher vom Fahrgastraum 18 aus für einen sich in dem Fahrgastraum 18 befindenden Fahrzeuginsassen nicht sichtbar.

Vorliegend ist auch durch den Abstand der Oberseite 22 des Vorsprungs 20 von der reflektierenden Oberfläche 24 der Glasscheibe 16 sichergestellt, dass der sich im Fahrgastraum 18 befindende Betrachter die Lichtquelle nicht sehen kann.

Die Seitenwand 30 des Vorsprungs 20 begrenzt im Zusammenwirken mit einem weiteren Teilbereich 32 des Vorsprungs 20 einen Lichtaustrittsbereich, welcher vorliegend als spaltförmiges Lichtaustrittsfenster 34 ausgebildet ist. Ein aus dem Lichtaustrittsfenster 34 austretender Lichtstrahl 36 ist in der Fig. schematisch gezeigt. Ein auf die reflektierende Oberfläche 24 der Glasscheibe 16 auftreffender Teil 38 des Lichtstrahls 36 wird an dieser Oberfläche 24 reflektiert. Ein reflektierter Teil 40 des Lichtstrahls 36 gelangt so in den Fahrgastraum 18, wo er von einem von unten auf die Glasscheibe 16 blickenden Betrachter wahrgenommen werden kann.

Eine Mittelebene des Lichtaustrittsfensters 34 hat im in der Fig. gezeigten Ausführungsbeispiel eine Ausrichtung, welche der des zur Oberfläche 24 hin einfallenden Teils 38 des Lichtstrahls 36 entspricht. Ebenso wie der einfallende Teil 38 des Lichtstrahls 36 ist daher die Mittelebene des Lichtaustrittsfensters 34 zu der reflektierenden Oberfläche 24 der Glasscheibe 16 hin geneigt ausgerichtet.

Vorliegend bestimmen die Größe und die Form des Lichtaustrittsfensters 34 das Bild der Lichtreflexion, welche der Betrachter auf der Oberfläche 24 der Glasscheibe 16 sieht. Durch die im Ausführungsbeispiel schmale Gestalt des Lichtaustrittsfensters 34 wird entsprechend auf der Oberfläche 24 der Glasscheibe 16 ein schmaler, präziser Lichtstreifen dargestellt.

Anstelle von Glas kann das im Dach 12 des Kraftwagens 10 angeordnete Fenster auch aus einem Kunststoff wie einem Polycarbonat oder dergleichen Material mit hochglänzender Oberfläche 24 gebildet sein. Der vom in die Ausnehmung 26 eingebetteten Lichtwellenleiter 28 ausgesendete Lichtstrahl 36 kann jedoch auch von anderen Hochglanzflächen wie beispielsweise im Dach 12 angeordneten Applikationen aus lackiertem Holz oder dergleichen reflektiert werden.

Anstelle einer durchgehenden, die Kontur der Glasscheibe 16 nachzeichnenden Linie - oder zusätzlich zu der Linie - können auch andere geometrische Figuren auf der reflektierenden, hochglänzenden Oberfläche 24 der Glasscheibe 16 dargestellt und vom sich im Fahrgastraum 18 befindenden Fahrzeuginsassen optisch erfasst werden.

So können etwa diskrete Lichtpunkte oder Abschnitte eines Lichtstreifens durch entsprechende Gestaltung von Lichtaustrittsfenstern 34 auf der reflektierenden Oberfläche 24 dargestellt werden. Auch kann eine wellenförmige oder gezackte Spiegelung im Glas der Glasscheibe 16 ein Konturlicht der Glasscheibe 16 oder eines derartigen hochglänzenden Materials bereitstellen.

Der Lichtwellenleiter 28 ist jedoch auch in solchen Fällen derart zu der reflektierenden Oberfläche 24 positioniert, dass der Lichtwellenleiter 28 (oder eine derartige Lichtquelle) für den sich im Fahrgastraum 18 befindenden Betrachter nicht sichtbar ist. Vielmehr sieht der Betrachter lediglich das aus dem Lichtaustrittsfenster 34 austretende, von dem Lichtwellenleiter 28 ausgesendete Licht, welches als Reflexion in der reflektierenden Oberfläche 24 vom Betrachter wahrgenommen wird.

Hierbei gibt die Kontur des Lichtaustrittsfensters 34 die Größenverhältnisse der auf der reflektierenden Oberfläche 24 dargestellten geometrischen Figur vor, etwa in Form der Linie oder einer anderen geometrischen Figur.

Anstelle eines Lichtwellenleiters 28 können auch mehrere Lichtquellen, insbesondere unter Verwendung von Streuscheiben, vorgesehen sein, um das aus dem Lichtaustrittsfenster 34 austretende Licht bereitzustellen.

## Patentansprüche

1. Leuchtanordnung für ein Kraftfahrzeug (10) mit wenigstens einer Lichtquelle (28) zum Aussenden von Licht (36), welches an einer durch einen Teil eines Dachs (12) des Kraftfahrzeugs (10) bereitgestellten Fläche (24) eines Kraftfahrzeugbauteils (16), die auch ein Teil der Leuchtanordnung (10) bildet, in einen Sichtbereich eines Betrachters der Fläche (24) reflektierbar ist, und mit einer Einfassung, durch welche die Lichtquelle (28) vor dem Betrachter verborgen ist, wobei die Einfassung wenigstens einen Lichtaustrittsbereich (34) umfasst, wobei eine Größe und eine Form des Lichtaustrittsbereichs (34) eine Größe und eine Form eines Bilds einer Lichtreflexion vorgeben, welches als geometrische Figur auf der reflektierenden Fläche (24) darstellbar ist, so dass die mittels des reflektierten Lichts (36) auf der Fläche (24) darstellbare geometrische Figur Größenverhältnisse aufweist, welche Größenverhältnissen einer durch den wenigstens einen Lichtaustrittsbereich (34) vorgegebenen Kontur des im Betrieb der Leuchtanordnung aus der Einfassung austretenden Lichts (36) entsprechen, **dadurch gekennzeichnet, dass**
die durch den wenigstens einen Lichtaustrittsbereich (34) vorgegebene Kontur wenigstens eine Linie umfasst, wobei die Fläche (24) im Betrieb der Leuchtanordnung das aus dem Lichtaustrittsbereich (34) austretende Licht als linienförmige geometrische Figur hin zum Betrachter reflektiert, welche einen Umriss des Kraftfahrzeugbauteils (16) nachzeichnet.

2. Leuchtanordnung nach Anspruch 1,
**dadurch gekennzeichnet, dass**
die wenigstens eine Linie unterbrochen ist und/oder eine Wellenform und/oder eine Zackenform aufweist.

3. Leuchtanordnung nach Anspruch 1 oder 2,
**dadurch gekennzeichnet, dass**
die durch den wenigstens einen Lichtaustrittsbereich (34) vorgegebene Kontur wenigstens einen Kegelschnitt, insbesondere wenigstens einen Kreis, und/oder wenigstens ein Polygon umfasst.

4. Leuchtanordnung nach einem der Ansprüche 1 bis 3,
**dadurch gekennzeichnet, dass**
die Einfassung durch einen Vorsprung (20) eines Grundkörpers (14) gebildet ist, an welchem das die reflektierende Fläche (24) aufweisende Kraftfahrzeugbauteil (16) angeordnet ist, wobei eine Mittelebene des Lichtaustrittsbereichs (34) zu der Fläche (24) geneigt ausgerichtet ist.

5. Leuchtanordnung nach einem der Ansprüche 1 bis 4,
**dadurch gekennzeichnet, dass**
als die wenigstens eine Lichtquelle (28) ein Lichtwellenleiter in der Einfassung angeordnet ist.

6. Leuchtanordnung nach einem der Ansprüche 1 bis 5,
**gekennzeichnet durch**
zumindest ein in dem wenigstens einen Lichtaustrittsbereich (34) angeordnetes Streuelement.

7. Leuchtanordnung nach einem der Ansprüche 1 bis 6,
**dadurch gekennzeichnet, dass**
in der Einfassung ein Reflexionselement angeordnet ist, mittels welchem das von der wenigstens einen Lichtquelle (28) ausgesendete Licht zu dem wenigstens einen Lichtaustrittsbereich (34) hin umlenkbar ist.

8. Leuchtanordnung nach einem der Ansprüche 1 bis 7,
**dadurch gekennzeichnet, dass**
zumindest die zum Reflektieren des Lichts (36) ausgebildete Fläche (24) des Kraftfahrzeugbauteils (16) durch ein Glas und/oder durch einen Kunststoff und/oder durch ein Holz gebildet ist.

9. Verfahren zum Betreiben einer Leuchtanordnung für ein Kraftfahrzeug (10), bei welchem wenigstens eine Lichtquelle (28) Licht (36) aussendet, welches an einer durch einen Teil eines Dachs (12) des Kraftfahrzeugs (10) bereitgestellten Fläche (24) eines Kraftfahrzeugbauteils (16), die auch ein Teil der Leuchtanordnung (10) bildet, in einen Sichtbereich eines Betrachters der Fläche (24) reflektiert wird, wobei die Lichtquelle (28) durch eine Einfassung vor dem Betrachter verborgen wird, und wobei das Licht (36) über wenigstens einen Lichtaustrittsbereich (34) aus der Einfassung ausgekoppelt wird,
wobei durch eine Größe und eine Form des Lichtaustrittsbereichs (34) eine Größe und eine Form eines Bilds einer Lichtreflexion vorgegeben werden, welches als geometrische Figur auf der reflektierenden Fläche (24) dargestellt wird, so dass die mittels des reflektierten Lichts (36) auf der Fläche dargestellte geometrische Figur Größenverhältnisse aufweist, welche Größenverhältnissen einer durch den wenigstens einen Lichtaustrittsbereich (34) vorgegebenen Kontur des aus der Einfassung austretenden Lichts (36) entsprechen,
**dadurch gekennzeichnet, dass**
die durch den wenigstens einen Lichtaustrittsbereich (34) vorgegebene Kontur wenigstens eine Linie umfasst, wobei die Fläche (24) das aus dem Lichtaustrittsbereich (34) austretende Licht als linienförmige geometrische Figur hin zum Betrachter reflektiert, welche einen Umriss des Kraftfahrzeugbauteils (16) nachzeichnet.

## Claims

1. Light arrangement for a motor vehicle (10) having at least one light source (28) for emission of light (36) which can be reflected on a surface (24) of a motor vehicle part (16), which surface is provided by a part of a roof (12) of the motor vehicle (10) and also forms a part of the light arrangement (10), into the field of view of an observer of the surface (24), and having a surround by which the light source (28) is hidden from the observer, wherein the surround comprises at least one light exit region (34), wherein the size and shape of the light exit region (34) predetermine the size and the shape of an image of a light reflection which can be represented as a geometric figure on the reflective surface (24), so that the geometric figure which can be represented on the surface (24) by means of the reflected light (36) can have proportions, which correspond to proportions of a contour of the light (36) exiting from the surround during operation of the light arrangement, said contour being predetermined by the at least one light exit region (34),
**characterised in that**
the contour predetermined by the at least one light exit region (34) comprises at least one line, wherein during operation of the light arrangement the light exiting from the light exit region (34) is reflected by the surface (24) towards the observer as a linear geometric figure which reproduces an outline of the motor vehicle part (16).

2. Light arrangement according to claim 1,
**characterised in that**
the at least one line is interrupted and/or has a wave shape and/or a serrated shape.

3. Light arrangement according to claim 1 or 2,
**characterised in that**
the contour predetermined by the at least one light exit region (34) comprises at least one conical section, in particular at least one circle, and/or at least one polygon.

4. Light arrangement according to one of claims 1 to 3,
**characterised in that**
the surround is formed by a projection (20) from a main body (14) on which the motor vehicle part (16) having the reflective surface (24) is arranged, wherein a central plane of the light exit region (34) is inclined with respect to the surface (24).

5. Light arrangement according to one of claims 1 to 4,
**characterised in that**
than an optical waveguide is arranged in the surround as the at least one light source (28).

6. Light arrangement according to one of claims 1 to 5,
**characterised by** at least one diffuser element arranged in the at least one light exit region (34).

7. Light arrangement according to one of claims 1 to 6,
**characterised in that**
a reflection element, by means of which the light transmitted by the at least one light source (28) can be deflected towards the at least one light exit region (34), is arranged in the surround.

8. Light arrangement according to one of claims 1 to 7,
**characterised in that**
at least the surface (24) of the motor vehicle part (16) constructed for reflection of the light (36) is formed by a glass and/or by a plastic and/or by a wood.

9. Method of operating a light arrangement for a motor vehicle (10), in which at least one light source (28) emits light (36) which is reflected on a surface (24) of a motor vehicle part (16) provided by a part of a roof (12) of the motor vehicle (10) which also forms a part of the light arrangement (10) is reflected into a field of view of an observer of the surface (24), wherein the light source (28) is hidden from the observer by a surround, and wherein the light (36) is coupled out of the surround via at least one light exit region (34),
wherein the size and shape of the light exit region (34) predetermine the size and the shape of an image of a light reflection which is represented as a geometric figure on the reflective surface (24), so that the geometric figure represented on the surface by means of the reflected light (36) has proportions which correspond to proportions of a contour of the light (36) exiting from the surround which is predetermined by the at least one light exit region (34),
**characterised in that**
the contour predetermined by the at least one light exit region (34) comprises at least one line, wherein the light exiting from the light exit region (34) is reflected by the surface (24) towards the observer as a linear geometric figure which reproduces an outline of the motor vehicle part (16).

## Revendications

1. Dispositif d'éclairage pour un véhicule automobile (10) avec au moins une source lumineuse (28), destinée à émettre de la lumière (36) qui peut être réfléchie au niveau d'une surface (24), fournie par une partie d'un toit (12) du véhicule automobile (10), d'une partie de véhicule automobile (16), laquelle partie constitue aussi une partie du dispositif d'éclairage (10), dans une zone visible d'un observateur de la surface (24), et avec un encadrement, par lequel la source lumineuse (28) est cachée à l'observateur, dans lequel l'encadrement comprend au moins une zone de sortie de lumière (34), dans lequel une grandeur et une forme de la zone de sortie de lumière (34) prescrivent une grandeur et une forme d'une image d'une réflexion de lumière qui peut être représentée comme une figure géométrique sur la surface réfléchissante (24) de telle sorte que la figure géométrique pouvant être représentée au moyen de la lumière réfléchie (36) sur la surface (24) présente des rapports de grandeur qui correspondent à des rapports de grandeur d'un contour, prédéterminé par l'au moins une zone de sortie de lumière (34), de la lumière (36) sortant de l'encadrement lors du fonctionnement du dispositif d'éclairage,
**caractérisé en ce que** le contour prédéterminé par l'au moins une zone de sortie de lumière (34) comprend au moins une ligne, dans lequel, lors du fonctionnement du dispositif d'éclairage, la surface (24) réfléchit vers l'observateur la lumière sortant de la zone de sortie de lumière (34) comme une figure géométrique en forme de ligne qui reproduit un contour de la partie de véhicule automobile (16).

2. Dispositif d'éclairage selon la revendication 1,
**caractérisé en ce que** l'au moins une ligne est interrompue et/ou présente une forme d'ondes et/ou une forme de dents.

3. Dispositif d'éclairage selon la revendication 1 ou 2,
**caractérisé en ce que** le contour prédéterminé par l'au moins une zone de sortie de lumière (34) comprend au moins une section conique, en particulier au moins un cercle, et/ou au moins un polygone.

4. Dispositif d'éclairage selon l'une quelconque des revendications 1 à 3,
**caractérisé en ce que** l'encadrement est formé par une partie en saillie (20) d'un corps de base (14) au niveau de laquelle est agencée la partie de véhicule automobile (16) comportant la surface réfléchissante (24), un plan médian de la zone de sortie de lumière (34) étant orienté de manière inclinée par rapport à la surface (24).

5. Dispositif d'éclairage selon l'une quelconque des revendications 1 à 4, **caractérisé en ce qu'**une fibre optique est agencée dans l'encadrement en tant que l'au moins une source lumineuse (28).

6. Dispositif d'éclairage selon l'une quelconque des revendications 1 à 5, **caractérisé par** au moins un élément de dispersion agencé dans l'au moins une zone de sortie de lumière (34).

7. Dispositif d'éclairage selon l'une quelconque des revendications 1 à 6, **caractérisé en ce qu'**un élément de réflexion est agencé dans l'encadrement, élément de réflexion au moyen duquel la lumière émise par l'au moins une source lumineuse (28) peut être déviée en direction de l'au moins une zone de sortie de lumière (34).

8. Dispositif d'éclairage selon l'une quelconque des revendications 1 à 7, **caractérisé en ce qu'**au moins la surface (24), réalisée pour réfléchir la lumière (36), de la partie de véhicule automobile (16) est formée par du verre et/ou par du plastique et/ou par du bois.

9. Procédé de fonctionnement d'un dispositif d'éclairage pour un véhicule automobile (10), selon lequel au moins une source lumineuse (28) émet de la lumière (36) qui est réfléchie au niveau d'une surface (24), fournie par une partie d'un toit (12) du véhicule automobile (10), d'une partie de véhicule automobile (16), laquelle partie constitue aussi une partie du dispositif d'éclairage (10),
dans une zone visible d'un observateur de la surface (24), dans lequel la source lumineuse (28) est cachée à l'observateur par un encadrement, et dans lequel la lumière (36) est sortie de l'encadrement par l'intermédiaire d'au moins une zone de sortie de lumière (34),
dans lequel une grandeur et une forme d'une image d'une réflexion de lumière sont prescrites par une grandeur et une forme de la zone de sortie de lumière (34), laquelle image est représentée comme une figure géométrique sur la surface réfléchissante (24) de telle sorte que la figure géométrique représentée au moyen de la lumière réfléchie (36) sur la surface présente des rapports de grandeur qui correspondent à des rapports de grandeur d'un contour, prédéterminé par l'au moins une zone de sortie de lumière (34), de la lumière (36) sortant de l'encadrement,
**caractérisé en ce que** le contour prédéterminé par l'au moins une zone de sortie de lumière (34) comprend au moins une ligne, dans lequel la surface (24) réfléchit vers l'observateur la lumière sortant de la zone de sortie de lumière (34) comme une figure géométrique en forme de ligne qui reproduit un contour de la partie de véhicule automobile (16).
